Europäisches Patentamt

European Patent Office

Office européen des brevets

(11) Veröffentlichungsnummer: 0 133 516
A2

(12) **EUROPÄISCHE PATENTANMELDUNG**

(21) Anmeldenummer: 84108789.3

(22) Anmeldetag: 25.07.84

(51) Int. Cl.⁴: **A 23 N 4/04**

(30) Priorität: 05.08.83 CH 4261/83

(43) Veröffentlichungstag der Anmeldung:
27.02.85 Patentblatt 85/9

(84) Benannte Vertragsstaaten:
AT BE DE FR GB IT LU NL SE

(71) Anmelder: Ferrum AG
Industriestrasse 351
CH-5102 Rupperswil(CH)

(72) Erfinder: Fehlmann, Viktor
Weierweg 16
CH-5033 Buchs(CH)

(74) Vertreter: Fillinger, Peter, Dr.
Rütistrasse 1a
CH-5400 Baden(CH)

(54) **Entsteinmaschine für Steinfrüchte.**

(57) Die Entsteinmaschine weist entlang einem Weg verschiebbare Entsteinplatten (6) mit Lochungen (10) zur Aufnahme der Steinfrüchte auf. Sie ist mit aufund abbewegbaren Entsteinmessern (25) versehen, die aufund abbewegbar in einer Entsteinstation (13) gelagert sind. Der Entsteinstation (13) ist in Bewegsrichtung der Entsteinplatten (6) eine Zentriereinrichtung (14) vorangestellt. Diese weist auf- und abbewegbare, auf die Lochungen (10) der Entsteinplatte (6) ausgerichtete und in diese in der unteren Endlage hineingreifende Finger (40, 44) auf. Um eine genaue achsiale Ausrichtung der Steinfrüchte auf die Lochungen (10) zu erreichen, wird vorgeschlagen, dass die Finger (40, 44) gummielastisch stauch- und biegbare Körper sind.

EP 0 133 516 A2

Croydon Printing Company Ltd.

Fig. 2

Entsteinmaschine für Steinfrüchte

---

Die vorliegende Erfindung bezieht sich auf eine Entsteinmaschine für Steinfrüchte, insbesondere gedörrte Zwetschgen mit entlang einem Weg verschiebbaren, Lochungen aufweisenden Entsteinplatten mit einer auf- und abbewegbare Entsteinmesser aufweisenden Entsteinstation der in Bewegungsrichtung der Entsteinplatten eine Zentriereinrichtung vorangestellt ist, welche auf- und abbewegbare, auf die Lochungen der Entsteinplatte ausgerichtete und in diese in der unteren Endlage hineingreifende Finger aufweist.

Derartige Entsteinmaschinen sind beispielsweise in der US-PS 4 313 373 beschrieben.

Diese bekannte, besonders zum Entsteinen von Datteln geeignete Maschine weist den Nachteil auf, dass beim Entsteinen von gedörrten Zwetschgen die Steine während des Entsteinungsvorganges insbesondere wegen der anderen Steinform, der zäheren Zwetschgenhaut usw. gelegentlich zertrümmert werden, so dass Steinsplitter oder ganze Steine in der Frucht verbleiben. Zur Beseitigung dieser Nachteile schlägt die Erfindung vor, eine Entsteinmaschine der eingangs erwähnten Art derart zu verbessern, dass die gedörrten Zwetschgen vor dem Entsteinvorgang wesentlich genauer koachsial zu den Entsteinmessern ausgerichtet werden.

- -

Erfindungsgemäss wird dieser Zweck dadurch erreicht, dass die Finger gummielastisch stauch- und biegbare Körper sind.

Nach einer bevorzugten Ausführungsform ist vorgesehen, dass in Förderrichtung der Entsteinplatten hintereinander Finger erster bzw. Finger zweiter Art vorhanden sind, und dass der Durchmesser der Finger erster Art höchstens gleich dem kleinsten Durchmesser einer Lochung ist und dass der Durchmesser der Finger zweiter Art in grober Näherung wenigstens gleich dem mittleren Durchmesser einer Lochung ist.

Die dünneren Finger erster Art drücken mit hoher Sicherheit auch quer über einer Lochung liegende Dörrzwetschgen mit einem Ende wenigstens teilweise in die Lochung hinein. Die derart schräg in die Lochung hineinragende Dörrfrucht wird anschliessend durch die Finger zweiter Art weiter achsial zur Lochung ausgerichtet und in diese hineingedrückt. Dies erfolgt vorteilhaft, wenn die Lochungen wenigstens im Bereich ihrer Längsmitte eine konische Form aufweisen. Diese konische Lochung bewirkt auch, dass die Frucht unter dem Druck der Entsteinmesser weiter achsial ausgerichtet und radial verspannt bleibt.

Anhand der beiliegenden schematischen Zeichnung wird die Erfindung beispielsweise erläutert. Es zeigen:
Fig. 1 eine Seitenansicht eines Ausführungsbeispiels,
  wobei Teile weggebrochen sind,

Fig. 2 ein Detail aus Fig. 1 in vergrösserter Darstellung vertikal geschnitten,

Fig. 3 einen Schnitt längs der Linie III - III in Fig. 2

Fig. 4 einen Schnitt längs der Linie IV - IV in Fig. 2 und

Fig. 5 und 6 zwei Varianten des Lochquerschnittes in der Lochplatte.

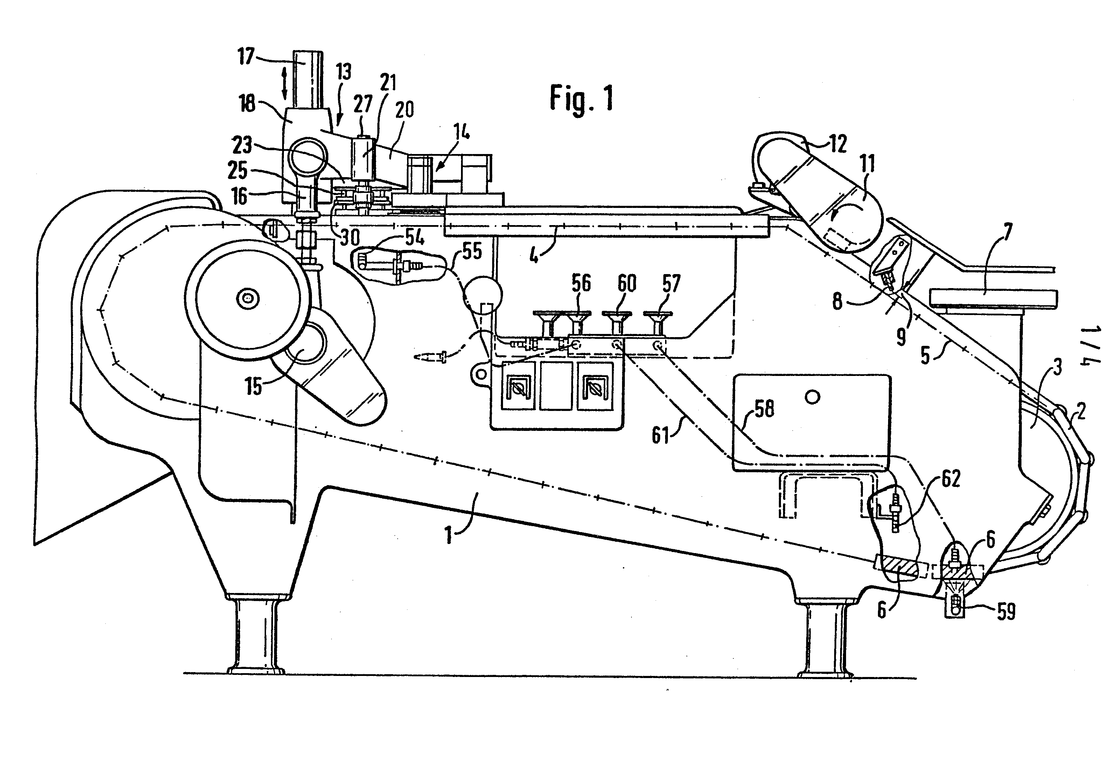

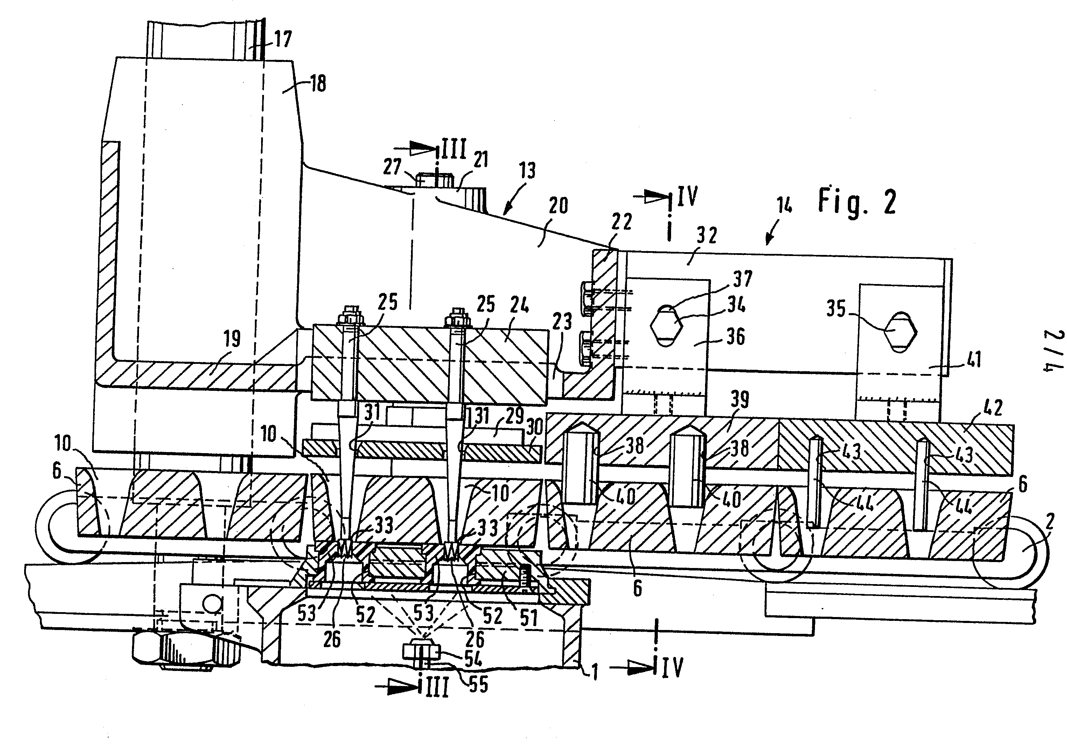

Fig. 1 zeigt eine Entsteinmaschine, deren Maschinenständer 1 seitlich teilweise weggebrochen ist. Die Entsteinmaschine weist zwei parallele Rollenketten 2 auf, die über Umlenkräder 3 (in der Zeichnung nur eines sichtbar) geführt sind. Die Rollenketten 2 sind derart über die Umlenkräder 3 geführt, dass sie einen horizontalen Trum 4 und einen ansteigenden Trum 5 bilden. Die beiden Rollenketten 2 sind von einem nicht dargestellten Antriebsmotor über ein Malteserkreuzgetriebe intermittierend angetrieben. Zwischen den Rollenketten 2 sind die Entsteinplatten 6 befestigt. Im Bereich des ansteigenden Trums 5 weist die Maschine einen Eingabetrichter 7 auf, in welchen diezu verarbeitenden Zwetschgen zu schütten sind. Quer über die Entsteinplatten 6 erstreckt sich im Eingabetrichter eine elastische Abstreifleiste 8, welche an den Seitenwänden des Eingabetrichters 7 höhenverstellbar befestigt ist, derart, dass die Entfernung 9 zwischen der Abstreifleiste einerseits und den Entsteinplatten 6 anderseits einstellbar ist. Die Entsteinplatten 6 weisen Löcher 10 (Fig. 2) für die Aufnahme der zu entsteinenden Früchte auf. Die Wirkung der Abstreifleiste 8 besteht darin, dass sich auf den Entsteinplatten 6 keine zu dicke Früchteschicht bildet, die von einer nachfolgenden Bürstenwalze 11 nicht bewältigt werden kann. Weiter bewirkt sie indirekt durch das Zurückhalten der Früchte, dass einzelne Früchte in noch nicht besetzte Lochungen 10 geschoben werden. Allfällig zwischen den Lochungen 10 liegende Früchte werden von der Bürstenwalze 11, welche sich in Richtung des eingezeichneten Pfeiles dreht, in den Eingabetrichter 7 zurückgeworfen. Die Bürstenwalze 11 bewirkt weiter, dass nur zum Teil in die Lochungen 10 hineinragende Zwetschgen in der Draufsicht angenähert parallel zur Transportrichtung der Entsteinplatten 6 orientiert werden. Die Bürstenwalze 11 ist von einem Motor 12 angetrieben. Die nach der Bürstenwalze 11 ganz oder teilweise in die Lochungen 10 hineinragenden und in der Draufsicht angenähert zur Förderrichtung parallel orientierten Zwetschgen werden schrittweise einer Entsteinungsstation 13 zugeführt, der in Förderrichtung gesehen eine Zentriereinrichtung 14 vorangestellt ist. Die Entsteinungsstation 13 weist einen beweglichen Teil auf, der von einer Exzenterwelle 15 über beidseits an der Maschine angeordnete Schubstangen 16 auf- und abbewegt wird und der an zwei maschinenfesten, zu gegenüberliegenden Seiten der Entsteinungsplatten 6 angeordneten Führungsstangen 17 vertikal verschiebbar gelagert ist. Während jedem Maschinentakt wird jeweils eine Entsteinplatte 6 der Entsteinstation 13 zugeführt.

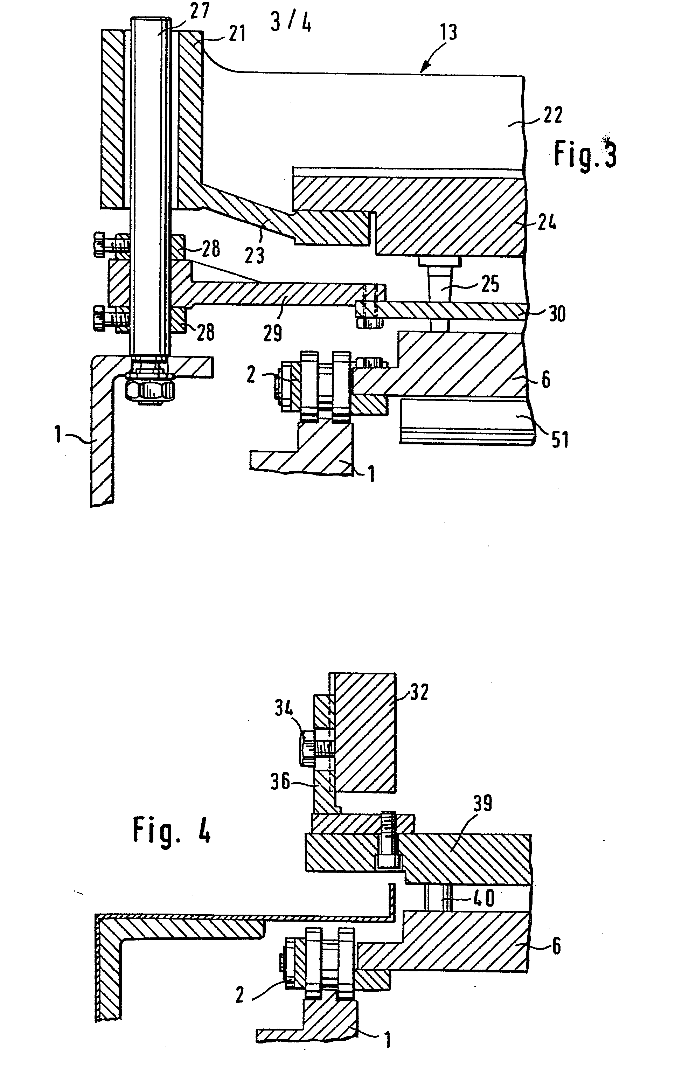

Wie aus Fig. 2 bis 4 hervorgeht, weist der bewegliche Teil der Entsteinstation 13 an jeder Führungsstange 17 eine auf- und abbewegbare Hülse 18 auf. Die beiden Hülsen 18 sind durch eine Querstrebe 19 fest miteinander verbunden. An jeder Hülse 18 ist je ein Ausleger 20 befestigt, welche je eine Führung 21 aufweisen und an den freien Enden durch eine Querstrebe 22 miteinander verbunden sind. Im Bereich der Führungen 21 sind an den Auslegern 20 Laschen 23 vorgesehen, an denen ein Messerhalter 24 festgeschraubt ist.

Im Messerhalter 24 ist eine Vielzahl von Entsteinmessern 25 befestigt, die stirnseitig am unteren Ende 26 durch entsprechende Anfräsungen kreuz- oder sternförmig verlaufende Schneidkanten aufweisen.

Der Uebergang von den Anfräsungen zum Messerschaft ist als scharfkantige Schulter 33 ausgebildet, mit der während des Hochfahrens des Messers nach dem Entsteinvorgang allfällige Fruchtfleischreste, die sich austrittseitig um den Lochrand verklemmen, mit nach oben gerissen und an der entsteinten Frucht abgestreift werden. In jedem Falle aber wird die entsteinte, zusammengedrückte Frucht aus der Lochung 10 herausgerissen und an der Abstreifplatte 30 abgestreift.

Am Maschinenständer 1 sind zu gegenüberliegenden Seiten der Entsteinplatten 6 je eine zylindrische Stange 27 befestigt, welche achsial zu den Führungen 21 ausgerichtet sind. Mittels Stellringen 28 sind an den beiden Stangen 27 je ein Ausleger 29 höhenverstellbar befestigt, an welchen eine Abstreifplatte 30 befestigt ist. Die Abstreifplatte 30 ist mit zu den Entsteinmessern 25 koachsial ausgerichteten Bohrungen 31 versehen. Die Höhe der Abstreifplatte 30 über den Entsteinplatten 6 ist so eingestellt, dass die Entsteinmesser 25 mit ihrem unteren Ende 26 in die Bohrungen 31 zurückgezogen sind, wenn sich die Hülsen 18 mit den Auslegern 20, den Laschen 23 und dem Messerhalter 24 in der oberen Endlage befinden und die daran abgestreiften Früchte mindestens noch teilweise in ihre Lochung 10 hineinragen.

An der Querstrebe 22 sind zwei parallele und von einander distanzierte Lagerplatten 32 festgeschraubt. In diese sind zu gegenüberliegenden Seiten je zwei Schrauben 34 und 35 eingeschraubt. Jede der beiden koachsial ausgerichteten Schrauben 34 ist durch ein Schlitzloch 37 eines zugeordneten Winkelstückes 36 hindurchgeführt, welche beiden Winkelstücke 36 fest mit einer Trägerplatte 39 verschraubt sind. Durch ein Lockern der Schrauben 34 können die Winkelstücke 36 mit der Trägerplatte 39 in der Höhe verstellt und durch ein Spannen der Schrauben 34 fixiert werden. Die Trägerplatte 39 weist Bohrungen 38 auf, in welche als Zentrierelemente wirkende zylindrische Körper 40 aus gummielastischem Material gesteckt sind. Die Körper 40 bestehen vorzugsweise aus porenfreiem Moosgummi oder einem anderen achsial elastischen federnden Material wie z.B. einer Schraubenfeder oder dergleichen. Mittels den beiden anderen koachsial ausgerichteten Schrauben 35 sind an den Lagern 32 weiter zwei Winkelstücke 41 höhenverstellbar befestigt, an denen eine weitere Trägerplatte 42 festgeschraubt ist. Die Trägerplatte 42 ihrerseits ist mit Bohrungen 43 versehen, in welche gummielastische, stiftförmige Körper 44 gesteckt sind, die einen kleineren Durchmesser als die Zentrierelemente 40 aufweisen. Auch die Körper 44 können durch Schraubenfedern gebildet sein. Werden die Hülsen 18 und mit ihnen die Querstrebe 19 von der Exzenterwelle 15 gehoben und gesenkt, werden die Entsteinmesser 25 sowie die Körper 40 und 44 in gleicher Weise gehoben und gesenkt, wobei sie sich in der oberen Endlage über den Entsteinplatten 6 befinden und in der unteren Endlage durch diese hindurch (Entsteinmesser 25) bzw. in diese hineinragen (Körper 40 und 44).

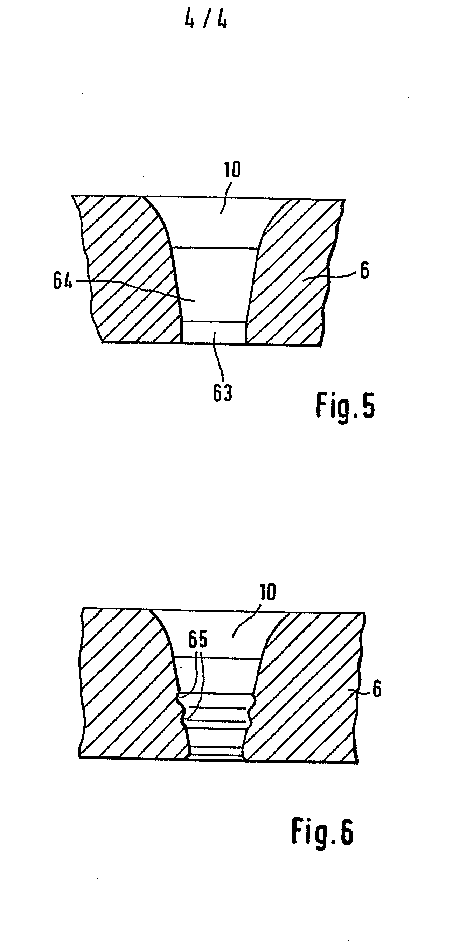

Wie Fig. 2 zeigt, befindet sich jeweils eine Entsteinplatte 6 unterhalb des Messerhalters 24 und von den beiden nachfolgenden Entsteinplatten 6 eine unterhalb der Trägerplatte 39 und eine unter der Trägerplatte 42. Die Entsteinplatten 6 sind mit einer Vielzahl von durchgehenden im Querschnitt konischen Lochungen 10 versehen, welche am oberen Ende trompetenrohrförmig ausgeweitet sind. Wesentlich ist, dass die Lochungen 10 über einen wesentlichen Tel eine konische Form aufweisen, wobei wie Fig. 5 zeigt, die untere Mündung zylindrisch ausgedreht sein kann. Vertikal unter dem Messerhalter 24 ist am Maschinenständer 1 eine Muffenplatte 51 befestigt. Diese weist zu den Messern 25 achsial ausgerichtete Bohrungen 52 auf, in welchen Muffen 53 gehalten sind. Die Muffen 53 weisen eine zentrale Durchtrittsöffnung auf und bilden eine Abstreiflippe für die Entsteinmesser 25.

Unterhalb der Muffenplatte 51 ist mindestens eine Sprühdüse 54 angeordnet, die über eine Leitung 55 und ein Ventil 56 mit einer Druckwasserquelle verbunden ist. Die Sprühdüse 54 besprüht die Muffen 53 von unten, so dass das untere Ende 26 der Steinmesser 25 wenn diese in der unteren Endlage durch die Muffen 53 hindurchstossen (Fig. 2) benetzt werden.

Ueber ein Ventil 57 und eine Leitung 58 sind mindestens eine weitere Sprühdüse 59 im Maschinenständer 1 angeordnet, welche die Entsteinplatten 6 vor dem Einlaufen in die Eingabetrichter 7 auf ihrer Oberseite mit Wasser besprühen, so dass sich die Lochungen 10 mit einem Wasserfilm überziehen.

Ueber ein Ventil 60 und eine Leitung 61 sind mindestens eine weitere im Maschinenständer angeordnete Reinigungsdüse 62 mit einer Druckwasserquelle verbunden. Diese besprühen die Unterseite der Entsteinplatten 6 mit Wasser, was in der Regel nur zu Reinigungszwecken nach längeren Betriebszeiten erforderlich ist.

Die beschriebene Vorrichtung funktioniert wie folgt:

Die Rollenketten 2 mit den Entsteinplatten 6 werden schrittweise angetrieben, so dass sich bei jedem Maschinentakt eine Entsteinplatte 6 unter dem Messerhalter 24 und je eine Entsteinplatte 6 unter den Trägerplatten 39 bzw. 42 befinden. Weiter werden die Ventile 56 und 57 geöffnet, so dass die den Eingabetrichter 7 erreichenden Entsteinplatten 6 aussenseitig mit einem Wasserfilm überzogen sind. Gleichzeitig werden jeweils die unteren Enden 26 der Messer 25 benetzt, wenn diese durch die Muffen 53 hindurchdringen. Alsdann werden gedörrte Zwetschgen in den Eingabetrichter 7 geschüttet. Von diesen fallen einzelne längsachsial in die Lochungen 10. Andere ragen teilweise in die Lochungen 10 hinein und liegen auf den oberen Rand der entsprechenden Lochung 10 auf. Einzelne Lochungen 10 bleiben leer. Mit schrittweisem Vorwärtsbewegen schieben sich die Entsteinplatten 6 unter der Abstreifleiste 8 hindurch. Uebereinanderliegende Zwetschgen werden dabei von der Abstreifleiste 8 zurückgehalten. Danach werden die Entsteinplatten 6 unter der Bürstenwalze 11 hindurchgeführt. Diese wischt die zwischen den Lochungen 10 befindlichen Zwetschgen in den Eingabetrichter 7 zurück.

- -

Die Entsteinplatten 6 mit den Zwetschgen werden taktweise vorwärts unter die Trägerplatte 42 bewegt.
Während einer Abwärtsbewegung der Trägerplatte 42 drücken
die gummielastisch verformbaren, stiftförmigen Körper 44
auf die Zwetschgen, wobei die Körper 44 achsial gestaucht
und/oder nach der Seite ausgebogen werden. Dadurch entsteht
ein grösserer Druck auf eines der Zwetschgenenden, das dadurch in das Loch 10 gedrückt und wenigstens näherungsweise in Richtung der Lochachse ausgerichtet wird. Nach
Erreichen der unteren Endlage wird die Trägerplatte 42
wieder angehoben und die Entsteinplatte 6 unter die Trägerplatte 39 bewegt und dort wieder angehalten. Bei der nächsten Abwärtsbewegung der Trägerplatte 39 treffen die
gummielastischen Körper 40 auf die zum mindesten teilweise
in die Löcher 10 hineinragenden Zwetschgen und werden
ebenfalls achsial gestaucht und/oder nach einer Seite
ausgebogen. Dadurch wird die Zwetschge vollständig in
das Loch 10 hineingedrückt und infolge der konischen
Lochform vollständig achsial zur Längsachse des Loches
10 und damit koachsial zum Entsteinmesser 21 ausgerichtet. Sind die Zwetschgen längsachsial in die konischen Löcher 10 gedrückt, wird die Trägerplatte 39 wieder angehoben und die Entsteinplatte 6 in einem nächsten Schritt unter den Messerhalter 24 bewegt.

An der Entsteinstation 13 erfolgt alsdann eine Abwärtsbewegung des Messerhalters 24. Dabei dringen die Messer 25 durch die Bohrungen 31 der Abstreifplatte 30 hindurch und stechen längsachsial in die Zwetschgen ein, wobei sie auf den Zwetschgenstein auftreffen und diesen nach unten aus dem Loch 10 herausstossen. Am Ende der Abwärtsbewegung durchdringen die Messer 25 die Muffen 53 und die unteren Messerenden 26 werden mit Wasser besprüht. Währendder anschliessenden Aufwärtsbewegung werden die Messer 25 durch die Zwetschgen hindurchgezogen, wobei allfällig daran haftende Zwetschgen an der Abstreifplatte 30 abgestreift werden. Die rückseitige Messerschulter 33 reisst in den Lochplatten 6 eingeklemmte Früchte mit zurück und streift sie an der Abstreifplatte 30 ab. Der am unteren Messerende 26 haftende Wasserfilm begünstigt das Zurückziehen der Messer 25 durch die Zwetschgen und verhindert weiter den Aufbau eines festen Zuckerkonzentrates an den Messern 25 selbst und an der Abstreifplatte 30. Die Entsteinmesser 25 bleiben während vielen Betriebsstunden blank und können daher ununterbrochen während mehreren Arbeitsschichten in Betrieb gehalten werden. Die ausgestossenen Steine fallen nach unten in eine nicht dargestellte Sammelrinne, wo sie von einer Austragschnecke
wegbefördert werden.

Nach der nächsten Umlenkung der Rollenketten 2
fallen die in den Lochungen 10 befindlichen Zwetschgen
aus diesen heraus, wobei sie durch einen an sich bekannten, nicht dargestellten Ausstosser, unterstützt werden.
Wegen der die Lochungen 10 überziehenden Wasserfilms bleiben die Zwetschgen an der Entsteinplatte 6 nicht haften.
Ebenso verhindert er den Aufbau eines Zuckerkonzentrates in den Lochungen 10, so dass besondere Reinigungsmassnahmen während des Betriebes entfallen. Erreicht
die geleerte Entsteinplatte 6 die Düse 59 wird sie auf
ihrer Oberfläche erneut mit Wasser besprüht und der beschriebene Arbeitablauf wiederholt sich.

Wie Fig. 5 zeigt, können die Löcher 10 am
unteren Ende eine zylindrische Ausdrehung 63 aufweisen,
wobei dadurch die besonders vorteilhafte Zentrierwirkung der Lochung 10 nicht verloren geht, wenn der konische Bereich 64 sich wenigstens in grober Näherung
über die halbe Dicke der Entsteinplatte 6 erstreckt.
Dank der konischen Querschnittsform der Lochung 10
werden die Zwetschgen während des Eindringens und
Durchdringes der Entsteinmesser 25 stabil in der Lochung 10 gehalten und zusätzlich durch radiale Anpresskräfte zentriert, so dass während des Entsteinvorganges, kein Stein durch das Entsteinmesser 25 zerstört wird.

Um zu verhindern, dass während des Entsteinens einzelne Steinfrüchte vom Entsteinmesser durch die Lochung 10 und die anschliessende Gummimuffe 53 hindurch in den Steinaustrag gedrückt werden, ist die Innenwandung der Lochung 10 vorzugsweise mit wenigstens zwei Ringrillen 65 versehen. Diese sind konzentrisch zur Längsachse der Lochung 10 ausgerichtet und weisen einen gerundeten Querschnitt auf. Die Uebergänge von Rille zu Rille bzw. von einer Rille zum angrenzenden Konusbereich 64 sind vorzugsweise gerundet.

Patentansprüche

---

1. Entsteinmaschine für Steinfrüchte, insbesondere gedörrte Zwetschgen mit entlang einem Weg verschiebbaren, Lochungen (10) aufweisenden Entsteinplatten (6) mit einer auf- und abbewegbaren Entsteinmesser (25) aufweisenden Entsteinstation (13) der in Bewegungsrichtung der Entsteinplatten (6) eine Zentriereinrichtung (14) vorangestellt ist, welche auf- und abbewegbare, auf die Lochungen (10) der Entsteinplatte (6) ausgerichtete und in diese in der unteren Endlage hineingreifende Finger (40, 44) aufweist, dadurch gekennzeichnet, dass die Finger (40, 44) gummielastisch stauch- und biegbare Körper sind.

2. Entsteinmaschine nach Anspruch 1, dadurch gekennzeichnet, dass in Förderrichtung der Entsteinplatten (6) hintereinander Finger erster bzw. Finger zweiter Art (44 bzw. 40) vorhanden sind, und dass der Durchmesser der Finger erster Art (44) höchstens gleich dem kleinsten Durchmesser einer Lochung (10) ist und dass der Durchmesser der Finger zweiter Art (40) in grober Näherung wenigstens gleich dem mittleren Durchmesser einer Lochung (10) ist.

3. Entsteinmaschine nach Anspruch 1 oder 2, dadurch gekennzeichnet, dass die Finger (40, 44) aus porenfreiem Moosgummi bestehen.

4. Entsteinmaschine nach einem der Ansprüche 1 bis 3, dadurch gekennzeichnet, dass die Lochungen (10) wenigstens im Bereiche ihrer Längsmitte eine konische Form aufweisen.

5. Entsteinmaschine nach Anspruch 4, dadurch gekennzeichnet, dass die Lochung (10) am oberen Ende trompetenrohrförmig ausgeweitet sind.

6. Entsteinmaschine nach Anspruch 4 oder 5, dadurch gekennzeichnet, dass die Lochung (10) im konischen Bereich (64) mindestens zwei Ringrillen mit vorzugsweise gerundeten Uebergängen aufweist.

7. Entsteinmaschine nach Anspruch 1, dadurch gekennzeichnet, dass die Entsteinmesser (25) am freien Ende sternförmig gezahnt sind und der Uebergang von der sternförmigen Zahnung (26) zum Messerschaft durch eine scharfkantige Schulter (33) gebildet wird.

8. Entsteinmaschine nach Anspruch 1, dadurch gekennzeichnet, dass die Körper (40, 44) Schraubenfedern sind.

Fig. 1

Fig. 2

0133516

0133516

3 / 4

Fig. 3

Fig. 4

Fig.5

Fig.6